# FASCICULE DE BREVET EUROPEEN

(11) **EP 1 692 894 B1**
(45) Date de publication et mention de la délivrance du brevet: **22.10.2008**
(21) Numéro de dépôt: 04805680.8
(22) Date de dépôt: 09.12.2004
(51) Int. Cl.: H04Q 7/32

(54) **TERMINAL BI-MODE D'ACCES A UN PREMIER RESEAU DE COMMUNICATION ET A UN DEUXIEME RESEAU DE COMMUNICATION LOCAL**
DOPPELMODUS-ENDGERÄTEZUGANG ZU EINEM ERSTEN FUNKKOMMUNIKATIONSNETZ UND ZU EINEM ZWEITEN LOKALEN KOMMUNIKATIONSNETZ
DUAL-MODE TERMINAL ACCESS TO A FIRST RADIOCOMMUNICATIONS NETWORK AND TO A SECOND LOCAL COMMUNICATIONS NETWORK

(30) Priorité: 11.12.2003 FR 0314552
(43) Date de publication de la demande: 23.08.2006
(73) Titulaire: Wavecom, 92442 Issy-les-Moulineaux Cedex (FR)
(72) Inventeur: DELIBIE, Yannick, F-35235 Thorigne-Fouillard (FR); MATHE, Jacques, F-22710 Penvenan (FR)
(74) Mandataire: Bioret, Ludovic
(86) Numéro de dépôt international: PCT/FR2004/003178
(87) Numéro de publication internationale: WO 2005/060290

(56) Documents cités:
- EP-A- 1 215 509
- EP-A- 1 349 413
- WO-A-03/055261
- FR-A- 2 830 161
- US-A1- 2002 102 974
- US-A1- 2003 100 308

## Description

### 1. Domaine de invention

Le domaine de l'invention est celui des radiocommunications. Plus précisément, l'invention concerne un terminal bi-mode permettant d'accéder, dans un premier mode de fonctionnement, à un réseau de radiocommunication, et, dans un deuxième mode de fonctionnement, à un réseau de communication local.

### 2. Solutions de l'art antérieur et inconvénients associés

On connaît déjà des terminaux bi-modes, capables de se connecter à deux réseaux de communication distincts par exemple tel que décrit dans le document de brevet américain US 2003/100308.

Ainsi par exemple, certains radiotéléphones sont compatibles avec les réseaux de radiocommunication européens d'une part, et nord-américains d'autre part. L'utilisateur, en fonction du continent sur lequel il se trouve, peut alors sélectionner manuellement, par un menu de son terminal, le réseau sur lequel il souhaite que son radiotéléphone se connecte.

Pour passer d'un mode de fonctionnement à l'autre, et d'un réseau de communication à l'autre, une intervention de l'utilisateur du terminal est cependant toujours nécessaire.

Lorsque les deux réseaux sont simultanément disponibles et accessibles pour le terminal, ce dernier fonctionne toujours sur l'un des réseaux, jusqu'à ce que l'utilisateur modifie manuellement son mode de fonctionnement.

Or, selon la situation dans laquelle se trouve l'utilisateur, l'un des réseaux peut être mieux adapté que l'autre, en termes de services, de qualité de transmission, de disponibilité de bande passante, ou encore de coût par exemple.

Un inconvénient de cette technique de l'art antérieur est donc que, si l'utilisateur oublie de modifier le mode de fonctionnement de son radiotéléphone, ce dernier peut établir ses communications via un réseau moins performant ou plus coûteux qu'un autre réseau également disponible auquel il pourrait avoir accès.

Pour pallier ce problème, on a aussi envisagé de concevoir des terminaux de radiocommunication bi-modes dans lesquels le choix du réseau de communication dont le terminal utilise les services se fait sans intervention de l'utilisateur. Dans ce cas, le radiotéléphone est programmé pour toujours tenter de se connecter en priorité au premier réseau de communication, avant tout établissement d'une communication. C'est alors seulement lorsque le premier réseau n'est pas disponible, ou pas accessible au terminal que ce dernier choisit d'utiliser les services du second réseau.

Cette solution est particulièrement avantageuse lorsque le premier réseau est globalement plus performant (éventail plus large de services, meilleure qualité de transmission, plus grande bande passante disponible, meilleure couverture géographique, etc.) ou moins coûteux que le second réseau.

Cependant, un inconvénient de cette technique de l'art antérieur est que le terminal tente toujours d'utiliser en priorité les services du premier réseau, même lorsque celui-ci n'est pas accessible (typiquement, lorsque l'utilisateur est en dehors de la zone de couverture géographique du premier réseau), ce qui est coûteux en ressources pour le terminal. Notamment, de telles tentatives de connexion infructueuses sont particulièrement consommatrices en énergie, et entraînent une décharge prématurée de la batterie du radiotéléphone.

### 3. Objectifs de l'invention

L'invention a notamment pour objectif de pallier ces inconvénients de l'art antérieur.

Plus précisément, un objectif de l'invention est de fournir un terminal bi-mode, permettant l'accès à au moins deux réseaux de communication distincts, dans lequel le choix du réseau de communication utilisé peut se faire sans intervention de l'utilisateur.

Un autre objectif de l'invention est de proposer un tel terminal bi-mode qui soit peu consommateur en termes de ressources, et évite notamment une décharge prématurée de la batterie.

L'invention a encore pour objectif de fournir un tel terminal bi-mode qui permette toujours d'utiliser en priorité le réseau le plus performant et/ou le moins coûteux lorsqu'il est disponible.

L'invention a aussi pour objectif de proposer un tel terminal bi-mode qui ne tente de se connecter à un réseau de communication qu'après confirmation que ce réseau lui est effectivement accessible.

Un autre objectif de l'invention est de fournir un tel terminal bi-mode qui soit simple à concevoir et à réaliser, et peu coûteux à utiliser.

### 4. Caractéristiques essentielles de l'invention

Ces objectifs, ainsi que d'autres qui apparaîtront par la suite, sont atteints à l'aide d'un terminal bi-mode permettant l'accès, dans un premier mode de fonctionnement, à au moins un premier réseau de radiocommunication et, dans un deuxième mode de fonctionnement, à au moins un deuxième réseau de communication local.

Selon l'invention, un tel terminal bi-mode comprend des moyens de détection, en fonction d'au moins une information de localisation dudit terminal, de présence dudit terminal dans une zone de couverture géographique associée audit deuxième réseau, dite présence positive, et des moyens, activés en cas de présence positive, de connexion audit deuxième réseau, de façon que ledit terminal fonctionne alors en priorité dans ledit deuxième mode.

Ainsi, l'invention repose sur une approche tout à fait nouvelle et inventive des terminaux bi-modes. En effet, l'invention propose de tenir compte de la position géographique du radiotéléphone, PDA, ou ordinateur portable communiquant, pour sélectionner le mode de fonctionnement, et donc le réseau de communication auquel le terminal va tenter de se connecter.

Contrairement aux techniques de l'art antérieur, l'utilisateur n'a donc plus besoin d'intervenir pour sélectionner le réseau auquel il veut se connecter : cette sélection est faite de manière automatique, par le terminal. Le terminal ne tente plus non plus systématiquement de se connecter au deuxième réseau, ce qui est coûteux en énergie : en effet, les moyens de connexion ne sont activés qu'après que le terminal a détecté qu'il se trouvait dans une zone potentiellement couverte par le deuxième réseau, et donc que cette tentative de connexion avait une chance de succès.

L'invention est particulièrement avantageuse lorsqu'elle s'applique à la flotte de terminaux mobiles d'une entreprise par exemple capables de se connecter, soit à un réseau de radiocommunication de type GSM, GSM/GPRS ou encore UMTS par exemple (premier réseau), soit au réseau de communication local de l'entreprise, de type WLAN ("Wireless Local Area Network", pour "réseau local sans fil") par exemple (deuxième réseau). En effet, dès que l'utilisateur se trouve sur l'un des sites de l'entreprise (centre de recherches, usine de production, entrepôts, services financiers, etc.), couvert par le deuxième réseau, son radiotéléphone bascule automatiquement sur le réseau de communication local de l'entreprise, ce qui lui permet de passer des communications à bas coût. En revanche, dès que l'utilisateur quitte l'enceinte de l'entreprise pour partir en déplacement ou se rendre à un rendez-vous, son radiotéléphone bascule automatiquement sur le premier réseau, sans que l'utilisateur n'ait eu besoin d'accomplir une quelconque manipulation.

Ainsi, les salariés de l'entreprise n'utilisent plus le premier réseau de radiocommunication, proposant des communications coûteuses, pour passer des appels en interne.

Préférentiellement, en cas de présence positive, ledit terminal bi-mode fonctionne selon ledit deuxième mode lorsqu'il est en communication avec un terminal également présent dans une zone de couverture géographique associée audit deuxième réseau.

Avantageusement, ladite information de localisation appartient au groupe comprenant :
- un identifiant d'une cellule dudit premier réseau de radiocommunication à laquelle est rattaché ledit terminal bi-mode ;
- une position géographique de type GPS (en anglais "Global Positioning System", en français "Système de positionnement mondial") dudit terminal ;
- une position géographique de type AGPS (en anglais "Assisted Global Positioning System", en français "Système de positionnement mondial assisté") dudit terminal ;
- une position géographique de type Galileo dudit terminal.

On rappelle que Galileo (marque déposée) est le nom du réseau européen de géo-localisation, et que, dans le système AGPS, on détermine une position GPS qui est précisée par l'opérateur d'un réseau de radiocommunication, par corrélation avec un identifiant de cellule du réseau dans laquelle se trouve l'utilisateur.

Selon une caractéristique avantageuse de l'invention, lesdits moyens de détection mettent en oeuvre une comparaison de ladite information de localisation dudit terminal et d'une liste d'informations de localisation correspondant effectivement à une zone de couverture géographique associée audit deuxième réseau, appelée liste de couverture, mémorisée dans ledit terminal.

De manière préférentielle, lesdits moyens de connexion comprennent des moyens d'identification ("ATTACH") dudit terminal auprès d'un serveur d'accès audit deuxième réseau et des moyens d'enregistrement ("REGISTER") de ladite information de localisation dudit terminal auprès d'un serveur d'enregistrement dudit deuxième réseau, ledit serveur d'enregistrement gérant des informations de localisation associées à un ensemble de terminaux prédéterminés.

Par exemple, dans le cas où le second réseau de communication local est un réseau privé d'entreprise, le serveur d'enregistrement peut gérer des informations de localisation associées à tous les terminaux bi-modes de la flotte de l'entreprise.

Avantageusement, ledit terminal bi-mode comprend des moyens de mémorisation d'au moins un profil de connexion dudit terminal audit deuxième réseau, chacun desdits profils de connexion associant, à l'une desdites informations de localisation de ladite liste de couverture, au moins un paramètre de connexion audit deuxième réseau.

Comme on le verra plus en détail par la suite, le terminal bi-mode peut ainsi savoir que, quand il se trouve dans la cellule n°X couverte par le deuxième réseau de communication local, il peut accéder aux services de ce dernier via un point d'accès dont il a mémorisé l'adresse dans le profil de connexion associé à la cellule n°X.

De façon préférentielle, ledit paramètre de connexion appartient au groupe comprenant :
- un identifiant dudit serveur d'accès (ou point d'accès) ;
- un identifiant dudit serveur d'enregistrement ;
- une adresse SIP (en anglais "Session Initiation Protocol", en français "protocole d'initiation de session") dudit terminal au sein dudit deuxième réseau ;
- un identifiant dudit terminal au sein dudit premier réseau.

Selon une variante de réalisation avantageuse, ledit ou lesdits profil(s) de connexion comprennent en outre au moins un paramètre applicatif dudit deuxième réseau.

Ainsi, le terminal bi-mode peut aussi accéder à certains services applicatifs du deuxième réseau, comme un agenda partagé, etc.

Préférentiellement, ledit paramètre applicatif appartient au groupe comprenant :
- un identifiant de serveur de nom de domaine DNS (en anglais "Domain Name Server") dudit deuxième réseau ;
- un identifiant de serveur proxy HTTP ou FTP dudit deuxième réseau ;
- une adresse IP (en anglais "Internet Protocol", en français "protocole internet") dudit terminal au sein dudit deuxième réseau ;
- un identifiant de serveur SMTP (en anglais "Simple Mail Transfer Protocol", en français "Protocole de transfert de courrier simple") dudit deuxième réseau.

De manière avantageuse, ledit ou lesdits profil(s) de connexion comprennent en outre au moins un paramètre d'authentification dudit terminal au sein dudit deuxième réseau.

On accroît ainsi la sécurité du deuxième réseau, en obligeant par exemple le terminal à s'authentifier au moyen d'un "login" et d'un mot de passe avant de pouvoir accéder aux services du réseau local.

De façon préférentielle, ledit terminal bi-mode comprend des moyens d'activation forcée desdits moyens de connexion, en cas de non-détection de présence positive, lesdits moyens de connexion mettant alors en oeuvre ledit ou lesdits dernier(s) paramètres de connexion utilisé(s) par ledit terminal.

Ainsi, lorsque le terminal ne détecte pas qu'il se trouve dans une zone couverte par le deuxième réseau (par exemple en raison d'une reconfiguration dynamique des identifiants de cellule réalisée par l'opérateur), mais que son utilisateur sait pourtant qu'il est physiquement situé dans une telle zone, il peut forcer le terminal à tenter d'utiliser les services du deuxième réseau, à partir des derniers paramètres de connexion mémorisés.

Avantageusement, un tel terminal bi-mode comprend des moyens de configuration dudit profil de connexion, permettant, lorsque ladite présence positive n'est pas détectée, mais que ledit terminal s'est connecté avec succès audit deuxième réseau, de mettre à jour ladite information de localisation mémorisée au sein dudit profil à l'aide d'une information de localisation courante dudit terminal.

On réactualise ainsi la liste de couverture, suite par exemple à une reconfiguration dynamique des identifiants de cellule par l'opérateur du réseau.

Préférentiellement, ledit premier réseau de radiocommunication appartient au groupe comprenant :
- les réseaux de type GSM (Groupe Spécial Mobile) ;
- les réseaux de type GPRS (en anglais "General Packet Rate Service") ;
- les réseaux de type UMTS (en anglais "Universal Mobile Telecommunication System", en français "Système de télécommunication mobile universel") ;
- les réseaux de type CDMA (en anglais "Code Division Multiple Access", en français "accès multiple par différence de code").

De façon préférentielle, ledit deuxième réseau de communication local est un réseau de type WLAN (en anglais "Wireless Local Area Network", en français "réseau local sans fil"), encore appelé WiFi (marque déposée, "Wireless Fidelity" pour "Fidélité sans fil").

Selon une caractéristique avantageuse de l'invention, ledit terminal bi-mode appartient au groupe comprenant :
- les radiotéléphones ;
- les PDAs (en anglais "Personal Digital Assistant", en français "Assistant numérique personnel") ;
- les ordinateurs portables.

Un tel terminal bi-mode peut bien sûr également prendre la forme de tout autre terminal communiquant susceptible de se déplacer et d'accéder à deux types de réseaux de communication distincts.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma illustratif d'un terminal bi-mode pouvant accéder, selon le mécanisme de l'invention, à un premier réseau de radiocommunication et à un deuxième réseau de communication local ;
- la figure 2 illustre le mécanisme d'établissement d'une communication par le terminal bi-mode de la figure 1 ;
- la figure 3 décrit la pile protocolaire du terminal bi-mode de la figure 1 ;
- les figures 4A à 4C présentent les différents serveurs du réseau de communication local, et leurs échanges avec le terminal bi-mode de la figure 1, lors de l'établissement d'une communication avec un terminal destinataire ;
- la figure 5 présente un exemple d'application de l'invention à une entreprise présentant plusieurs sites géographiquement distincts.

### 6. Description d'un mode de réalisation de l'invention

Le principe général de l'invention repose sur l'utilisation d'une information de localisation d'un terminal de radiocommunication bi-mode, pour déterminer s'il se trouve dans une zone potentiellement couverte par un réseau de communication local, et tenter ainsi d'utiliser en priorité les services de ce réseau local, plutôt que ceux d' un réseau de radiocommunication classique.

Dans toute la suite de la description, on s'attache à décrire une application particulière de l'invention à une flotte de terminaux bi-modes d'une entreprise répartie sur plusieurs sites géographiques distincts. L'invention n'est bien sûr nullement limitée à cette application particulière, et présente plus généralement un intérêt pour tout terminal bi-mode pouvant accéder d'une part à un réseau de radiocommunication et d'autre part à un réseau de communication local, que ce terminal soit à usage personnel ou professionnel.

L'invention s'applique notamment à tout type de terminal communiquant, qu'il s'agisse d'un téléphone, d'un PDA, d'un ordinateur, etc.

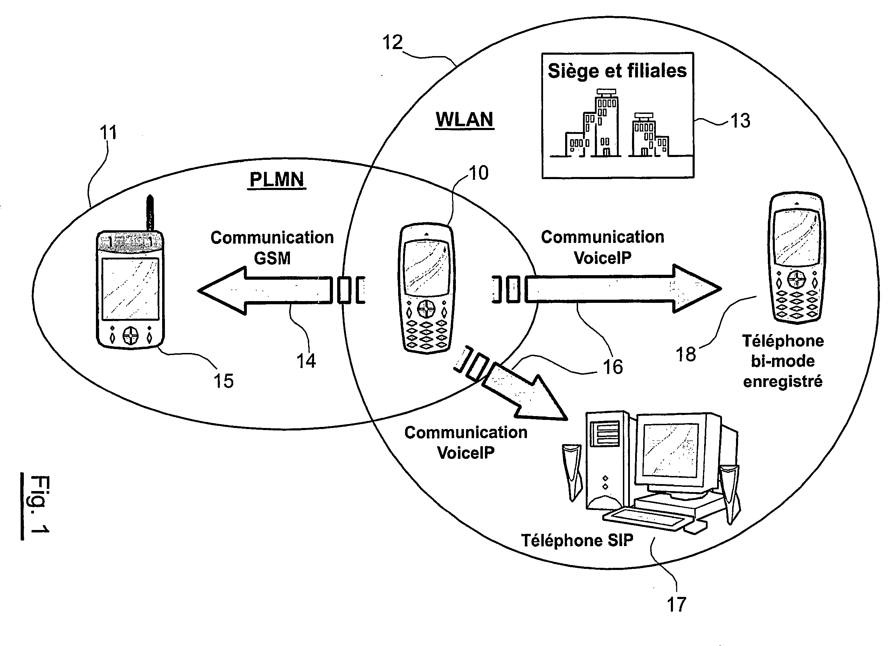

On présente, en relation avec la figure 1, un exemple de terminal bi-mode 10, pouvant accéder, d'une part à un premier réseau de communication 11 de type PLMN ("Public Land Mobile Network" pour "réseau public terrestre mobile"), et d'autre part à un deuxième réseau de communication 12 de type WLAN ("Wireless Local Area Network" pour "réseau local sans fil").

Le réseau PLMN 11 est géré par un opérateur de service et, dans l'exemple de la figure 1, est conforme à la norme GSM. Le réseau WLAN 12 est quant à lui un réseau privé, par exemple un réseau d'entreprise. L'accès au réseau WLAN est un accès sans fil, mais le réseau privé en lui-même peut être de type filaire. Par exemple, dans le cas d'une entreprise, chaque bureau peut être équipé d'une base à laquelle le terminal bi-mode 10 peut se connecter par voie hertzienne, les différentes bases étant reliées entre elles par un réseau câblé. Le réseau privé 12 peut également être un réseau de type sans fil.

Dans l'exemple de la figure 1, le terminal bi-mode est situé dans une zone géographique couverte par le réseau WLAN 12, c'est-à-dire dans l'enceinte du siège, de l'un des sites ou de l'une des filiales de l'entreprise 13. Il peut donc :
- soit établir une communication de type GSM 14 avec un terminal 15 (par exemple un PDA) non-accessible par le réseau WLAN 12 ;
- soit établir une communication de type VoiceIP 16 (communication mettant en oeuvre un protocole de type internet) avec un autre terminal du réseau WLAN 12. Cet autre terminal peut être un téléphone de type SIP 17 ("Session Initiation Protocol", pour "protocole d'initiation de session", à savoir canal de signalisation pour un service de type Voice Over IP), ou un autre téléphone bi-mode enregistré comme présent dans le réseau WLAN 18.

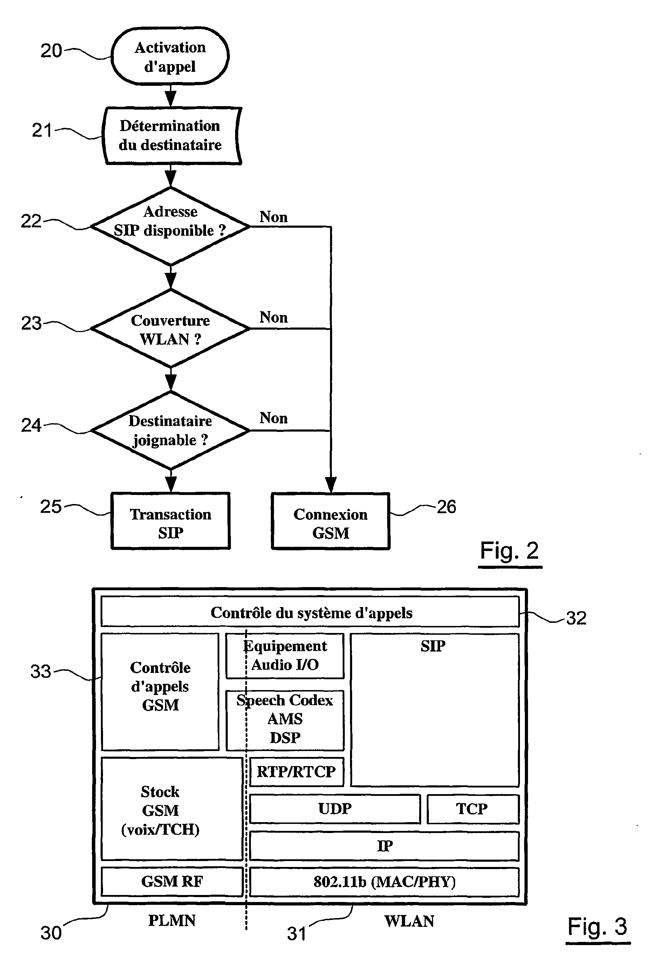

La figure 2 présente plus en détail le mécanisme mis en oeuvre lorsque le terminal bi-mode 10 souhaite établir une communication avec l'un des terminaux 15, 17, 18 de la figure 1. On suppose que le terminal bi-mode 10 est situé dans une zone géographique couverte par le réseau privé WLAN 12.

Lorsque le terminal bi-mode 10 active (20) la fonctionnalité d'appel, on détermine tout d'abord (21) quel en est le destinataire, en fonction du numéro de téléphone saisi au clavier par l'utilisateur. L'identité de ce destinataire est mémorisée, dans le répertoire téléphonique du terminal bi-mode 10, en association avec son numéro de téléphone GSM (par exemple sous la forme +33614151617), et éventuellement avec son adresse SIP (par exemple sous la forme john.doe@nowhere.com), si ce terminal a des droits d'accès au réseau privé WLAN 12 (i.e. si le terminal appartient à la même flotte de terminaux d'entreprise).

Si l'adresse SIP du destinataire n'est pas disponible (22), la communication avec ce dernier se fera selon le mode GSM (26), via le réseau PLMN 11.

Si en revanche on connaît l'adresse SIP du destinataire (22), on détermine, à partir d'une information de localisation qui lui est associée (selon un mécanisme qui sera décrit plus en détail dans la suite de ce document), si celui-ci se trouve dans une zone géographique potentiellement couverte par le réseau WLAN 12 (par exemple, dans l'un des sites de l'entreprise ou l'une des ses filiales, éventuellement à l'étranger).

Dans la négative, la communication sera établie (26) par le réseau PLMN GSM 11. Dans l'affirmative, on détermine si le destinataire est effectivement joignable (24). En effet, celui-ci peut se trouver dans une zone associée au réseau WLAN 12, mais être en pratique hors de portée de ce réseau. Comme on le verra par la suite, ceci est le cas notamment lorsque la position du terminal est déterminée en fonction de l'identifiant de la cellule GSM dans laquelle il se trouve : le terminal destinataire peut alors se trouver dans une cellule du réseau PLMN 11 dans laquelle est situé l'un des sites de l'entreprise, mais être physiquement éloigné de ce site (lorsque la cellule est de taille beaucoup plus grande que le site de l'entreprise par exemple).

Si le destinataire est joignable, on établit (25) une communication de type SIP. Dans le cas contraire, la communication entre le terminal bi-mode 10 et le destinataire sera de type GSM (26).

Comme on le verra plus en détail par la suite, l'établissement de la transaction SIP (25) nécessite la connaissance de paramètres de connexion particuliers au réseau WLAN 12, comme l'adresse d'un serveur d'enregistrement (ou REGISTRAR), et/ou d'un serveur proxy.

La figure 3 décrit la structure de la pile protocolaire ("protocol stack") d'un terminal bi-mode 10 selon l'invention.

Cette pile comprend deux ensembles 30 et 31 dédiés respectivement aux fonctionnalités du réseau public PLMN 11 et du réseau privé WLAN 12. Chacune des couches de ces ensembles est classique, et ne sera donc pas décrite ici plus en détail.

Seules la couche de contrôle du système d'appels 32 et de contrôle d'appels GSM 33 comprennent des fonctionnalités spécifiques à la mise en oeuvre de l'invention, et à la gestion des informations de localisation.

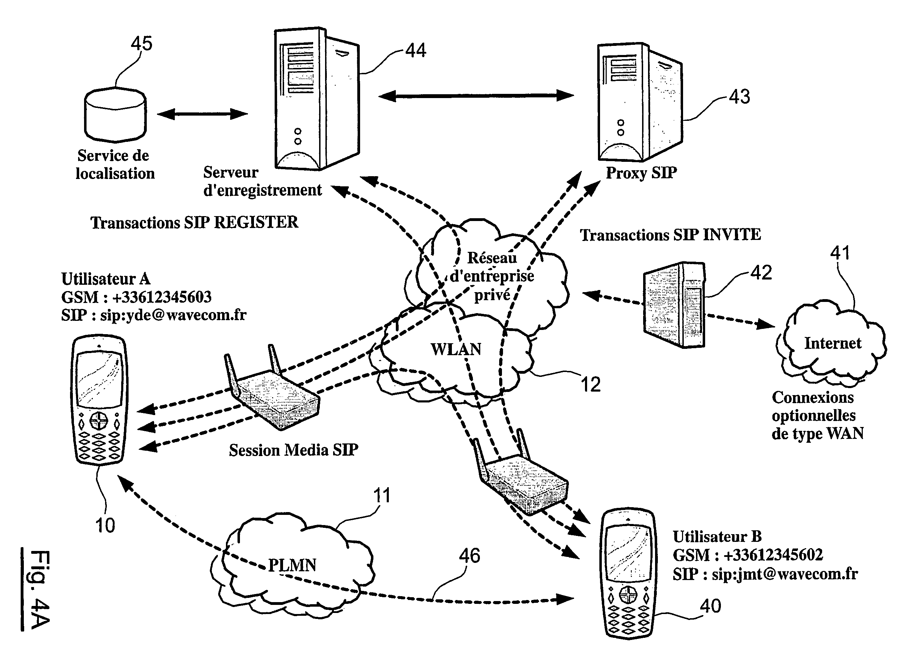

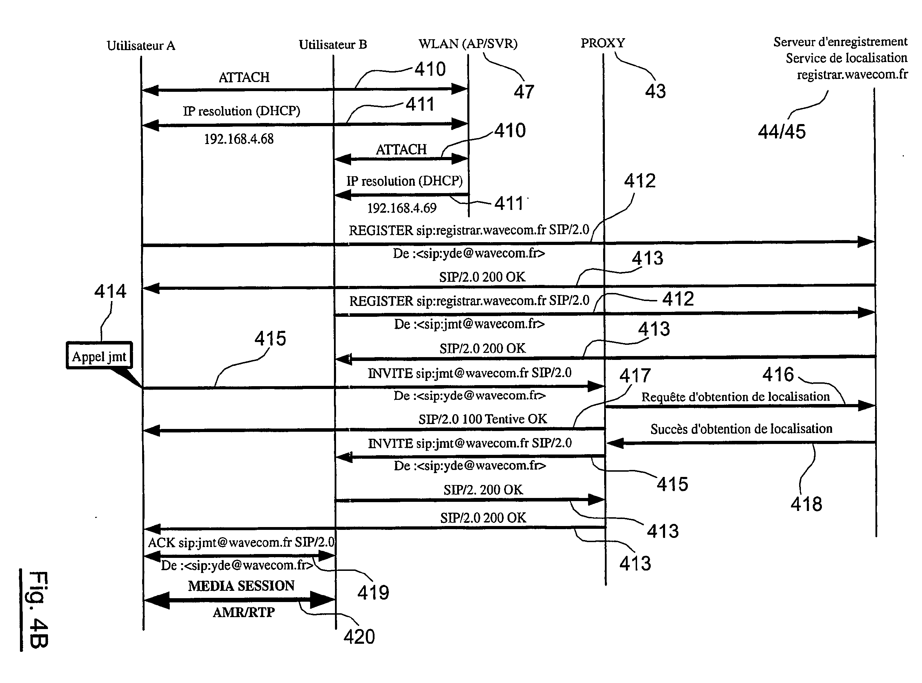

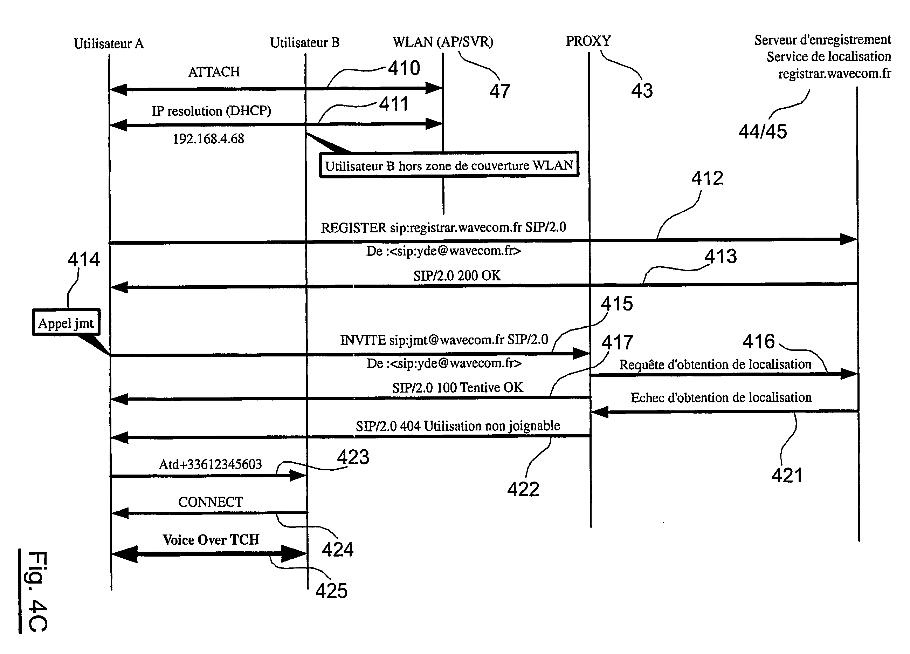

On présente désormais, en relation avec les figures 4A à 4C, les différents serveurs du réseau privé WLAN 12 communiquant avec le terminal bi-mode 10, lorsque celui-ci souhaite établir une communication avec un terminal destinataire également présent dans le réseau WLAN (figure 4B), ou absent de ce réseau (figure 4C).

Le terminal 10 est celui d'un utilisateur A, identifié d'une part par son numéro de téléphone GSM (+33612345603) et d'autre part par son adresse sip au sein du réseau privé WLAN 12 (yde@wavecom.fr).

Dans l'exemple des figures 4A à 4C, on considère que l'utilisateur A est situé dans une zone géographique couverte par le réseau privé WLAN 12. Par exemple, le terminal bi-mode 10 a déterminé quelle était la station de base du réseau GSM 11 à laquelle il était connecté, et en a déduit la cellule (identifiée par son CellId) du réseau GSM 11 dans laquelle il se trouvait. Après comparaison de l'identifiant de cette cellule avec une liste de couverture mémorisée dans le terminal, correspondant à la liste des toutes les cellules GSM dans lesquelles l'entreprise possède des bureaux ou un site, le terminal bi-mode 10 en déduit s'il est ou non présent dans une zone potentiellement couverte par le réseau WLAN 12. Dans l'affirmative, il tente de se connecter au réseau privé WLAN 12, comme décrit plus en détail par la suite en relation avec les figures 4B et 4C.

Pour ce faire, le terminal bi-mode 10 s'enregistre auprès du serveur d'enregistrement, ou REGISTRAR, 44 du réseau WLAN 12, en communiquant à ce dernier son adresse sip (transactions de type SIP REGISTER). Le REGISTRAR 44 mémorise alors dans le service de localisation 45 que le terminal bi-mode 10, d'adresse sip yde@wavecom.fr, est localisé sur l'un des sites de l'entreprise.

Comme illustré par la figure 4A, dès lors qu'il a accédé au réseau privé WLAN 12, le terminal bi-mode 10 peut :
- transmettre des requêtes au serveur proxy SIP 43 du réseau d'entreprise privé 12, par exemple pour accéder à certaines ressources du réseau WLAN 12 (gestion d'agenda partagé, allocation de bande passante, consultation de courrier électronique, etc.), sous la forme de transactions SIP INVITE ;
- accéder au réseau Internet 41, éventuellement via le pare-feu (ou "firewall") 42 protégeant le réseau local 12. Pour ce faire, des connexions optionnelles de type WAN ("Wide Area Network" pour "réseau étendu") peuvent être établies ;
- entrer en communication avec un utilisateur B. Cet utilisateur B peut ne pas appartenir à l'entreprise : la communication se fera alors nécessairement par le réseau PLMN 11, comme symbolisé par la flèche 46. Si le terminal de l'utilisateur B appartient à la flotte de terminaux mobiles bi-modes de l'entreprise, il est identifié, d'une part par son numéro d'abonné GSM (+33612345602), et d'autre part par son adresse SIP (jmt@wavecom.fr). S'il est présent dans l'une des zones couvertes par le réseau WLAN 12, l'utilisateur A peut entrer en communication avec lui via le réseau privé d'entreprise 12 (figure 4B). Dans le cas contraire, la communication entre les utilisateurs A et B sera de type GSM (figure 4C).

La figure 4B décrit plus particulièrement l'établissement d'une communication entre les utilisateurs A et B, lorsqu'ils sont tous les deux présents et autorisés à se connecter au réseau WLAN privé 12.

Après avoir détecté qu'il se trouvait dans une zone potentiellement couverte par le réseau WLAN 12 (à partir de la CellId de la cellule GSM dans laquelle il se trouve, ou de sa position GPS par exemple), le terminal 10 de l'utilisateur A active des moyens de connexion au réseau WLAN 12. Pour ce faire, il lance une procédure d'ATTACH 410 auprès du serveur 47 servant de point d'accès au réseau WLAN 12 (AP/SVR).

Le serveur d'accès 47 renvoie à l'utilisateur A une confirmation de type IP résolution (DHCP) 411.

L'utilisateur B, après détection de sa présence dans une zone potentiellement couverte par le réseau WLAN 12, procède de même.

Les utilisateurs A et B s'enregistrent ensuite auprès du serveur d'enregistrement 44 du réseau privé 12, par une requête de type REGISTER 412. Le REGISTRAR 44 mémorise dans le service de localisation 45 l'adresse sip des utilisateurs A et B, associée à une indication de présence des terminaux correspondants dans la zone de couverture du réseau privé 12.

Le REGISTRAR 44 envoie ensuite à chacun des utilisateurs A et B une confirmation d'enregistrement 413.

On notera que, dans le cas où l'entreprise est répartie sur plusieurs sites géographiquement éloignés, il y a au moins un REGISTRAR 44 et au moins un serveur d'accès 47 par site.

Une fois ces procédures d'enregistrement terminées, les utilisateurs A et B sont tous deux effectivement connectés au réseau privé 12.

Lorsque l'utilisateur A souhaite entrer en communication avec l'utilisateur B (414), il envoie un message de type INVITE 415 au serveur proxy 43. Ce message INVITE 415 comprend comme paramètres l'adresse SIP de l'utilisateur A et l'adresse SIP du destinataire B. On rappelle qu'un serveur proxy est une entité intermédiaire qui agit, et comme serveur, et comme client, pour émettre des requêtes au nom d'autres clients.

Sur réception du message INVITE 415, le serveur proxy 43 émet, à destination du serveur d'enregistrement 44, une requête 416 d'obtention de localisation de l'utilisateur B, afin de déterminer si ce dernier est présent dans l'enceinte de l'un des sites de l'entreprise, et donc accessible via le réseau WLAN 12. En parallèle, le serveur proxy 43 confirme (417) à l'utilisateur A qu'il a bien émis cette requête 416 d'obtention de localisation.

Lorsque, après consultation du service de localisation 45, le serveur d'enregistrement 44 détermine que l'utilisateur B est bien enregistré comme présent dans le réseau WLAN 12, il envoie un message 418 au serveur proxy 43, lui confirmant que l'utilisateur B est joignable par le biais du réseau privé d'entreprise 12.

Le serveur proxy 43 se charge alors de contacter l'utilisateur B, par un message de type INVITE 415, avec comme paramètres l'adresse SIP de l'appelant yde@wavecom.fr, et l'adresse SIP de l'utilisateur B jmt@wavecom.fr. L'utilisateur B confirme alors (413) la réception de ce message au serveur proxy 43, qui la confirme (413) à son tour à l'utilisateur A.

L'utilisateur A envoie un acquittement ACK 419 à l'utilisateur B, et une communication 420 de type AMR/RTP ("Adaptive Multi-Rate/Real-time Transport Protocol") est alors établie entre les terminaux de ces deux utilisateurs. On rappelle que l'acronyme AMR désigne un codec vocal sans fil spécifique, et que l'acronyme RTP désigne un protocole support de type UDP/IP pour les services de type Voice Over IP.

La figure 4C présente un mécanisme similaire, mais dans le cas où l'utilisateur B ne se trouve pas dans une zone géographique couverte par le réseau WLAN 12.

On ne décrit pas en détail les étapes qui sont semblables à celle de la figure 4B (à savoir, procédure d'ATTACH 410 de l'utilisateur A auprès du serveur d'accès 47, et procédure d'enregistrement 412 auprès du REGISTRAR 44). On notera que les éléments identiques sont désignés par les mêmes références numériques sur l'ensemble des figures, et notamment les figures 4A à 4C.

Comme sur la figure 4B, l'utilisateur A, lorsqu'il souhaite appeler (414) l'utilisateur B, envoie un message d'INVITE 415 au serveur proxy 43, qui à son tour envoie, d'une part une requête 416 d'obtention de la localisation de l'utilisateur B au serveur d'enregistrement 44, et d'autre part une confirmation 417 à l'utilisateur A.

Contrairement au cas de la figure 4B, l'utilisateur B n'étant pas dans l'enceinte de l'un des sites de l'entreprise, le serveur d'enregistrement 44, après avoir consulté le service de localisation 45, répond (421) au serveur proxy 43, en lui indiquant que l'utilisateur B n'est pas enregistré comme présent sur le réseau privé WLAN 12. Le serveur proxy 43 transmet cette information à l'utilisateur A, sous la forme d'un message SIP 422 indiquant que l'utilisateur B n'est pas joignable.

L'utilisateur A contacte alors (423) l'utilisateur B par le biais du réseau GSM 11, en s'identifiant au moyen de son numéro de téléphone GSM +33612345603. Lorsque l'utilisateur B accepte la connexion 424, une communication de type Voice Over TCH 425 est alors établie entre les utilisateurs A et B, par le réseau de radiocommunication PLMN 11.

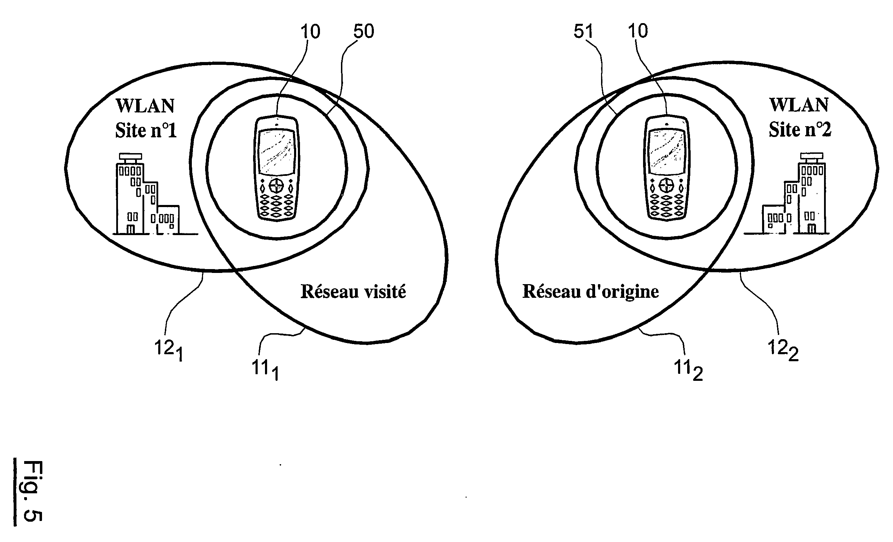

La figure 5 détaille plus particulièrement le cas d'une entreprise multi-sites, dont les bureaux peuvent être répartis sur des zones géographiques éloignées. Par exemple, l'entreprise a son siège social en Europe et une filiale en Asie. Chacun de ces sites est couvert par un réseau privé WLAN : la filiale asiatique, encore appelée site n°1, est équipée d'un premier réseau privé WLAN 12₁, et le siège européen, encore appelé site n°2, est équipé d'un second réseau privé WLAN 12₂.

Le terminal bi-mode 10 est rattaché à son réseau public PLMN d'origine 11₂. Lorsqu'il est situé dans la cellule 51 de ce réseau 11₂, il peut accéder, tant au réseau WLAN 12₂ du siège européen de l'entreprise qu'au réseau public PLMN d'origine 11₂.

Selon l'invention, on peut prévoir que le terminal bi-mode 10 mémorise, dans une liste de couverture, les identifiants de cellule GSM de tous les sites de l'entreprise, et donc notamment l'identifiant de cellule 51 du siège européen de l'entreprise, et l'identifiant de cellule 50 de sa filiale asiatique. Ainsi, lorsque l'utilisateur du terminal bi-mode 10 est en déplacement en Asie, et se connecte au réseau PLMN visité 11₁, le terminal bi-mode 10 peut détecter sa présence dans la cellule GSM 50, et en déduire qu'il est à proximité du réseau privé WLAN 12₁ de la filiale asiatique. Le terminal 10 peut alors automatiquement basculer en mode de fonctionnement local, via le réseau privé WLAN 12₁ pour pouvoir passer des communications à bas coût, à destination d'autres terminaux de la flotte mobile de l'entreprise, même si ces derniers sont localisés dans l'enceinte du siège européen.

Des profils d'accès aux réseaux privés 12₁ et 12₂ peuvent être mémorisés dans le terminal bi-mode 10, associés à chacun des identifiants de cellule 50, 51 (on rappelle que la localisation peut aussi être fonction d'une information GPS par exemple, et non d'un identifiant de cellule GSM). Ces profils peuvent regrouper des paramètres de connexion élémentaires (comme la configuration du point d'accès au réseau WLAN 12₁, 12₂, c'est-à-dire l'adresse du serveur d'accès 47 de chacun des sites européen et asiatique, ou la configuration VPN ("Virtual Private Network" pour "réseau privé virtuel")), et éventuellement des paramètres applicatifs (adresse du serveur d'enregistrement 44 et d'un serveur proxy 43 de chacun des sites, etc.).

Tous ces paramètres peuvent être préconfigurés dans le terminal bi-mode 10, ou faire l'objet d'une phase d'apprentissage. Cette dernière variante est particulièrement avantageuse, lorsque l'information de localisation est un identifiant de cellule du réseau PLMN, pour faire face au phénomène de reconfiguration dynamique des cellules par l'opérateur du réseau 11.

En effet, le CellId, ou identifiant de cellule GSM, est géré par l'opérateur du réseau, et peut donc être modifié dynamiquement sans que les utilisateurs du réseau n'en soient informés.

Ainsi, le terminal bi-mode 10 peut avoir mémorisé que la cellule GSM 50 était associée à la filiale asiatique de l'entreprise. Cependant, lors du prochain déplacement de l'utilisateur en Asie, si l'opérateur a ente temps opéré une reconfiguration dynamique du réseau PLMN visité 11₁, le terminal bi-mode 10 ne reconnaîtra plus, à partir de l'identifiant de la cellule dans laquelle il se trouve, qu'il est présent dans l'enceinte de la filiale asiatique de l'entreprise ; le terminal bi-mode 10 ne choisira donc pas de manière automatique d'utiliser les services du réseau local WLAN 12₁.

Si l'utilisateur sait pourtant qu'il se trouve dans l'un des sites de l'entreprise, il peut lancer une phase d'apprentissage par son terminal bi-mode 10, de façon à mettre à jour la liste de couverture mémorisée. Le terminal bi-mode 10 lance alors une phase d'accrochage automatique sur l'antenne de la station de base du réseau public PLMN 11₁ la plus proche, et en déduit l'identifiant de la cellule dans laquelle il se trouve, qui correspond donc à la filiale asiatique de l'entreprise.

Il tente alors de se connecter au réseau privé WLAN 12₁, à partir des paramètres de connexion, et éventuellement des paramètres applicatifs, qu'il avait mémorisés dans le profil de connexion associé à cette filiale asiatique de l'entreprise (en relation avec l'ancien CellId mémorisé pour cette filiale). Si cette connexion est possible, le terminal bi-mode 10 met simplement à jour la liste de couverture avec le nouvel identifiant de la cellule dans laquelle il se trouve, ainsi que le profil de connexion associé.

Le profil de connexion du terminal 10 pour un site particulier de l'entreprise peut aussi contenir des droits d'accès spécifiques aux applications disponibles sur le réseau WLAN local. Ainsi, on peut envisager que l'utilisateur d'un terminal bi-mode 10 basé au siège européen de l'entreprise ait accès, via le réseau local européen WLAN 12₂, à toutes les applications de ce réseau (gestion d'agenda partagé, serveurs e-mails, etc.) mais que ses droits d'accès au réseau local WLAN 12₁ de la filiale asiatique soient limités (par exemple à la seule consultation de son courrier électronique).

D'autres services peuvent encore être accessibles à l'utilisateur du terminal bi-mode 10 lorsqu'il est occasionnellement en déplacement en Asie, tels que par exemple l'achat ponctuel de bande passante, pour satisfaire un besoin temporaire de téléchargement de fichiers.

Le profil de connexion du terminal bi-mode 10 peut encore contenir des paramètres d'authentification, tels qu'un nom d'accès (ou "login") et un mot de passe. On sécurisé ainsi l'accès au réseau local visité 12₁.

## Revendications

1. Terminal bi-mode (10) permettant l'accès, dans un premier mode de fonctionnement, à au moins un premier réseau de radiocommunication (11) et, dans un deuxième mode de fonctionnement, à au moins un deuxième réseau de communication local (12),
comprenant des moyens de détection, en fonction d'au moins une information de localisation dudit terminal, de présence dudit terminal dans une zone de couverture géographique associée audit deuxième réseau (12), dite présence positive,
et des moyens, activés en cas de présence positive, de connexion audit deuxième réseau (12), de façon que ledit terminal (10) fonctionne alors en priorité dans ledit deuxième mode,
**caractérisé en ce que** lesdits moyens de détection mettent en oeuvre une comparaison de ladite information de localisation avec une liste d'informations de localisation correspondant ladite zone de couverture géographique associée audit deuxième réseau, appelée liste de couverture, mémorisée dans ledit terminal,
et **en ce que** ledit terminal bi-mode comprend des moyens d'activation forcée desdits moyens de connexion, en cas de non-détection de présence positive,
lesdits moyens de connexion mettant alors en oeuvre ledit dernier paramètre de connexion utilisé par ledit terminal ou lesdits derniers paramètres de connexion utilisés par ledit terminal.

2. Terminal bi-mode selon la revendication 1, **caractérisé en ce qu'**en cas de présence positive, il fonctionne selon ledit deuxième mode lorsqu'il est en communication avec un terminal également présent dans une zone de couverture géographique associée audit deuxième réseau.

3. Terminal bi-mode selon l'une quelconque des revendications 1 et 2, **caractérisé en ce que** ladite information de localisation est :
- un identifiant (50, 51) d'une cellule dudit premier réseau de radiocommunication à laquelle est rattaché ledit terminal bi-mode ; ou
- une position géographique de type GPS dudit terminal ; ou
- une position géographique de type AGPS dudit terminal ; ou
- une position géographique de type Galileo dudit terminal.

4. Terminal bi-mode selon l'une quelconque des revendications 1 à 3, **caractérisé en ce que** lesdits moyens de connexion comprennent des moyens d'identification (410) dudit terminal auprès d'un serveur d'accès (47) audit deuxième réseau (12) et des moyens d'enregistrement (412) de ladite information de localisation dudit terminal auprès d'un serveur d'enregistrement (44) dudit deuxième réseau, ledit serveur d'enregistrement gérant des informations de localisation associées à un ensemble de terminaux prédéterminés.

5. Terminal bi-mode selon l'une quelconque des revendications 1 à 4, **caractérisé en ce qu'**il comprend des moyens de mémorisation d'au moins un profil de connexion dudit terminal audit deuxième réseau,
chacun desdits profils de connexion associant, à l'une desdites informations de localisation de ladite liste de couverture, au moins un paramètre de connexion audit deuxième réseau.

6. Terminal bi-mode selon la revendication 5, **caractérisé en ce que** ledit paramètre de connexion est :
- un identifiant dudit serveur d'accès ; ou
- un identifiant dudit serveur d'enregistrement ; ou
- une adresse SIP dudit terminal au sein dudit deuxième réseau ; ou
- un identifiant dudit terminal au sein dudit premier réseau.

7. Terminal bi-mode selon l'une quelconque des revendication 5 et 6, **caractérisé en ce** ledit profil ou lesdits profils de connexion comprennent en outre au moins un paramètre applicatif dudit deuxième réseau.

8. Terminal bi-mode selon la revendication 7, **caractérisé en ce que** ledit paramètre applicatif est :
- un identifiant de serveur de nom de domaine DNS dudit deuxième réseau ; ou
- un identifiant de serveur proxy (43) HTTP ou FTP dudit deuxième réseau ;
ou
- une adresse IP dudit terminal au sein dudit deuxième réseau ; ou
- un identifiant de serveur SMTP dudit deuxième réseau.

9. Terminal bi-mode selon l'une quelconque des revendications 5 à 8, **caractérisé en ce que** ledit profil ou lesdits profils de connexion comprennent en outre au moins un paramètre d'authentification dudit terminal au sein dudit deuxième réseau.

10. Terminal bi-mode selon l'une quelconque des revendication 1 à 9, **caractérisé en ce qu'**il comprend des moyens de configuration dudit profil de connexion, permettant, lorsque ladite présence positive n'est pas détectée, mais que ledit terminal s'est connecté avec succès audit deuxième réseau, de mettre à jour ladite information de localisation mémorisée au sein dudit profil à l'aide d'une information de localisation courante dudit terminal.

11. Terminal bi-mode selon l'une quelconque des revendications 1 à 10, **caractérisé en ce que** ledit premier réseau de radiocommunication est :
- un réseau de type GSM ; ou
- un réseau de type GPRS ; ou
- un réseau de type UMTS ; ou
- un réseau de type CDMA.

12. Terminal bi-mode selon l'une quelconque des revendications 1 à 11, **caractérisé en ce que** ledit deuxième réseau de communication local est un réseau de type WLAN.

13. Terminal bi-mode selon l'une quelconque des revendications 1 à 12, **caractérisé en ce qu'**il est :
- un radiotéléphone ; ou
- un PDA ; ou
- un ordinateur portable.

## Claims

1. Dual-mode terminal (10) allowing access, in a first operating mode, to at least one first radiocommunication network (11) and, in
a second operating mode, to at least one second local communication network (12),
comprising means for detecting, on the basis of at least one information of location of said terminal, the presence of said terminal in a geographic coverage area associated with said second network (12), called positive presence,
and means, which are activated in the case of positive presence, for connecting to said second network (12), so that said terminal (10) operates first in said second mode,
**characterised in that** said detection means implement a comparison between said information of location and a list of information of location corresponding to said geographic coverage area associated with said second network, called a coverage list, stored in said terminal,
and **in that** said dual-mode terminal comprises means for forcing the activation of said connection means if a positive presence is not detected,
said connection means then implementing said last connection parameter(s) used by said terminal.

2. Dual-mode terminal according to claim 1, **characterised in that** in the case of positive presence, the terminal operates according to said second mode when it is in communication with a terminal also located in a geographic coverage area associated with said second network.

3. Dual-mode terminal according to any one of claims 1 and 2, **characterised in that** said information of location is:
- an identifier (50, 51) of a cell of said first radiocommunication network to which said dual-mode terminal is connected; or
- a GPS-type geographic position of said terminal; or
- an AGPS-type geographic position of said terminal; or
- a Galileo-type geographic position of said terminal.

4. Dual-mode terminal according to any one of claims 1 to 3, **characterised in that** said connection means include means for identifying (410) said terminal by an access server (47) for accessing said second network (12) and means for storing (412) said information of location of said terminal by a registration server (44) of said second network, said registration server managing location information associated with a set of predetermined terminals.

5. Dual-mode terminal according to any one of claims 1 to 4, **characterised in that** the terminal includes means for storing at least one connection profile for connecting said terminal to said second network,
each of said connection profiles associating at least one parameter for connection to said second network with one of said information of location of said coverage list.

6. Dual-mode terminal according to claim 5, **characterised in that** said connection parameter is:
- an identifier of said access server; or
- an identifier of said storing server; or
- an SIP address of said terminal within said second network; or
- an identifier of said terminal within said first network.

7. Dual-mode terminal according to any one of claims 5 and 6, **characterised in that** said connection profile(s) further include at least one application parameter of said second network.

8. Dual-mode terminal according to claim 7, **characterised in that** said application parameter is:
- an identifier of the domain name server DNS of said second network; or
- an identifier of the HTTP or FTP proxy server (43) of said second network;
- an IP address of said terminal within said second network; or
- an identifier of the SMTP server of said second network.

9. Dual-mode terminal according to any one of claims 5 to 8, **characterised in that** said connection profile(s) further include at least one parameter for authenticating said terminal within said second network.

10. Dual-mode terminal according to any one of claims 1 to 9, **characterised in that** the terminal includes means for setting-up said connection profile, enabling, when said positive presence is not detected but said terminal is successfully connected to said second network, to update said information of location stored in said profile with a current information of location of said terminal.

11. Dual-mode terminal according to any one of claims 1 to 10, **characterised in that** said first radiocommunication network is:
- a GSM-type network; or
- a GPRS-type network; or
- a UMTS-type network; or
- a CDMA-type network.

12. Dual-mode terminal according to any one of claims 1 to 11, **characterised in that** said second local communication network is a WLAN-type network.

13. Dual-mode terminal according to any one of claims 1 to 12, **characterised in that** the terminal is:
- a cellular telephone; or
- a PDA; or
- a portable computer.

## Patentansprüche

1. Doppelmodus-Endgerät (10), das in einem ersten Betriebsmodus den Zugang zu mindestens einem ersten Funkkommunikationsnetz (11) und in einem zweiten Betriebsmodus den Zugang zu mindestens einem zweiten lokalen Kommunikationsnetz (12) ermöglicht,
umfassend Mittel zur Erkennung des Vorhandenseins dieses Endgeräts in einem dem zweiten Netz (12) zugeordneten räumlichen Abdeckungsbereich, "positives Vorhandensein" genannt, anhand von mindestens einer Information zur Ortung des Endgeräts
und Mittel zum Verbinden mit diesem zweiten Netz (12), die bei positivem Vorhandensein aktiviert werden, so dass dieses Endgerät (10) daraufhin vorrangig in dem zweiten Betriebsmodus funktioniert,
**dadurch gekennzeichnet, dass** diese Erkennungsmittel die Ortungsinformation mit einer Liste mit Ortungsinformationen für den räumlichen Abdeckungsbereich des zweiten Netzes vergleichen, die Abdeckungsliste genannt wird und in diesem Endgerät gespeichert ist,
und dass das Doppelmodus-Endgerät Mittel zur Zwangsaktivierung dieser Verbindungsmittel bei Nichterkennung des positiven Vorhandenseins umfasst,
wobei diese Verbindungsmittel daraufhin den oder die letzten von diesem Endgerät verwendeten Verbindungsparameter einsetzen.

2. Doppelmodus-Endgerät nach Anspruch 1, **dadurch gekennzeichnet, dass** es bei positivem Vorhandensein gemäß dem zweiten Betriebsmodus funktioniert, wenn es mit einem Endgerät verbunden ist, das sich ebenfalls in einem dem zweiten Netz zugeordneten räumlichen Abdeckungsbereich befindet.

3. Doppelmodus-Endgerät nach einem beliebigen der Ansprüche 1 und 2, **dadurch gekennzeichnet, dass** es sich bei der Ortungsinformation handelt um:
- eine Kennung (50, 51) einer Zelle des ersten Funkkommunikationsnetzes, mit der das Doppelmodus-Endgerät verbunden ist, oder
- eine räumliche Position des Typs GPS des Endgeräts oder
- eine räumliche Position des Typs AGPS des Endgeräts oder
- eine räumliche Position des Typs Galileo des Endgeräts.

4. Doppelmodus-Endgerät nach einem beliebigen der Ansprüche 1 bis 3, **dadurch gekennzeichnet, dass** die Verbindungsmittel Mittel zur Identifikation (410) des Endgeräts bei einem Zugangsserver (47) zum zweiten Netz (12) und Mittel zur Registrierung (412) der Ortungsinformation des Endgeräts bei einem Registrierungsserver (44) des zweiten Netzes umfassen, wobei der Registrierungsserver Ortungsinformationen verwaltet, die einer Gruppe vorgegebener Endgeräte zugewiesen sind.

5. Doppelmodus-Endgerät nach einem beliebigen der Ansprüche 1 bis 4, **dadurch gekennzeichnet, dass** es Mittel zum Speichern von mindestens einem Verbindungsprofil des Endgeräts für das zweite Netz umfasst,
wobei jedes dieser Verbindungsprofile einer der Ortungsinformationen aus der Abdeckungsliste mindestens einen Parameter zur Verbindung mit dem zweiten Netz zuweist.

6. Doppelmodus-Endgerät nach Anspruch 5, **dadurch gekennzeichnet, dass** es sich bei dem Verbindungsparameter handelt um:
- eine Kennung des Zugangsservers oder
- eine Kennung des Registrierungsservers oder
- eine SIP-Adresse des Endgeräts innerhalb des zweiten Netzes oder
- eine Kennung des Endgeräts innerhalb des ersten Netzes.

7. Doppelmodus-Endgerät nach einem beliebigen der Ansprüche 5 und 6, **dadurch gekennzeichnet, dass** das Verbindungsprofil oder die Verbindungsprofile darüber hinaus mindestens einen Anwendungsparameter des zweiten Netzes umfassen.

8. Doppelmodus-Endgerät nach Anspruch 7, **dadurch gekennzeichnet, dass** es sich bei diesem Anwendungsparameter handelt um:
- eine Kennung des Domain Name Servers (DNS) des zweiten Netzes oder
- eine Kennung des HTTP- oder FTP-Proxyservers (43) des zweiten Netzes oder
- eine IP-Adresse des Endgeräts innerhalb des zweiten Netzes oder
- eine Kennung des SMTP-Servers des zweiten Netzes.

9. Doppelmodus-Endgerät nach einem beliebigen der Ansprüche 5 bis 8, **dadurch gekennzeichnet, dass** das Verbindungsprofil oder die Verbindungsprofile darüber hinaus mindestens einen Parameter zur Authentifikation des Endgeräts innerhalb des zweiten Netzes umfassen.

10. Doppelmodus-Endgerät nach einem beliebigen der Ansprüche 1 bis 9, **dadurch gekennzeichnet, dass** es Mittel zur Konfiguration des Verbindungsprofils umfasst, die es, wenn das positive Vorhandensein nicht erkannt wird, aber das Endgerät erfolgreich mit dem zweiten Netz verbunden ist, ermöglichen, die in diesem Profil gespeicherte Ortungsinformation mit Hilfe einer aktuellen Ortungsinformation des Endgeräts zu aktualisieren.

11. Doppelmodus-Endgerät nach einem beliebigen der Ansprüche 1 bis 10, **dadurch gekennzeichnet, dass** es sich bei dem ersten Funkkommunikationsnetz handelt um:
- ein GSM-Netz oder
- ein GPRS-Netz oder
- ein UMTS-Netz oder
- ein CDMA-Netz.

12. Doppelmodus-Endgerät nach einem beliebigen der Ansprüche 1 bis 11, **dadurch gekennzeichnet, dass** es sich bei dem zweiten lokalen Kommunikationsnetz um ein WLAN handelt.

13. Doppelmodus-Endgerät nach einem beliebigen der Ansprüche 1 bis 12, **dadurch gekennzeichnet, dass** es:
- ein Funktelefon oder
- ein PDA oder
- ein Laptop ist.
